# EUROPEAN PATENT SPECIFICATION

(11) **EP 1 805 335 B1**
(45) Date of publication and mention of the grant of the patent: **05.11.2014**
(21) Application number: 05777918.3
(22) Date of filing: 06.09.2005
(51) Int. Cl.: C22B 3/26, C22B 3/32, C22B 23/00

(54) **PROCESS FOR PREPARING NICKEL LOADED ORGANIC EXTRACTANT SOLUTION**
VERFAHREN ZUR HERSTELLUNG EINER NICKELBELADENEN ORGANISCHEN EXTRAKTIONSMITTELLÖSUNG
PROCEDE DE PREPARATION D'UNE SOLUTION CONTENANT UN AGENT D'EXTRACTION ORGANIQUE CHARGE DE NICKEL

(30) Priority: 13.09.2004 NZ 53527204
(43) Date of publication of application: 11.07.2007
(73) Proprietor: Canopean PTY. Ltd, Brisbane QLD 4077 (AU)
(72) Inventor: NAKON, David, Brisbane, Queensland (AU)
(74) Representative: Lusuardi, Werther
(86) International application number: PCT/AU2005/001345
(87) International publication number: WO 2006/029439

(56) References cited:
- WO-A1-02/22896
- US-A- 4 148 631
- US-A- 4 221 765
- US-A- 5 364 452
- US-A- 5 378 262
- US-A- 6 149 885
- US-B1- 6 231 823
- US-B2- 6 692 709

## Description

### TECHNICAL FIELD

This invention relates to a process for extracting metal ions from aqueous solutions. In particular, the invention relates to a process for preparing an organic solution containing an extractant loaded with nickel ions and using that solution in a process to obtain nickel, cobalt and/or manganese ions, and optionally other metal ions, from an aqueous solution containing these ions.

### BACKGROUND

Many industrial processes, for example mining processes, produce aqueous solutions containing one or more metal ions. Depending on its source, the aqueous solution may contain nickel and cobalt ions, in addition to other metal ions such as zinc, manganese, copper and iron. In some cases it is desirable for the metal ions to be extracted and purified from the aqueous solution.

In a typical solvent extraction process, an aqueous solution containing metal ions is mixed with an organic extractant in an organic solvent. The organic solvent is typically a hydrocarbon solvent. Typical organic extractants include organic acids, for example versatic acid, and chelation extractants, for example certain hydroxy oximes. The organic extractant typically has an available proton which can be exchanged with a metal ion from the aqueous solution. Thus, during the extraction process, the organic extractant solution becomes loaded with metal ions.

The formation of metal ion loaded organic extractants for use in such separation technologies is well known. For example, one method of forming calcium and magnesium loaded organic extractants is described and claimed in the applicant's patent US 6,692,709.

Following extraction of the metal ions from the aqueous solution into the organic extractant solution, the organic extractant solution is typically subjected to a stripping process. The standard stripping method involves contacting the organic solution with an aqueous acid, such as sulphuric acid or hydrochloric acid, to transfer the metal ions to an aqueous solution leaving reprotonated organic extractant to be recycled for further extraction.

It is desirable to be able to selectively extract the metal ions from the aqueous solution. Selectivity can be controlled to an extent by maintaining the pH in a predetermined range for a particular organic extractant. The avoidance of any coextraction means that stripping of the organic extractant solution results in an aqueous solution containing only one type of metal ion. The metal can then be recovered in pure form using standard methods such as electrolysis.

Processes for extracting nickel ions from aqueous solutions containing nickel ions have received much attention over past decades. Aqueous solutions containing nickel and other metal ions, such as cobalt, manganese, copper, zinc, calcium, magnesium, iron, and aluminium, are typically produced by the acid leaching of nickel containing ores such as nickel laterites, or the leaching of nickel sulphide containing concentrates by biological or non biological methods.

A well known technology for refining nickel and cobalt involves the bulk precipitation of a mixed nickel, cobalt, copper, and zinc sulphide from aqueous solution by the use of hydrogen sulphide gas at elevated temperature and pressure. The mixed sulphide is then releached at high temperature and pressure and subjected to several purification and separation steps to produce nickel and cobalt products. This process involves intermediate bulk solids generation and handling, coupled with bulk use of hydrogen sulphide which is an extremely toxic gas, and is therefore technically difficult and costly. Additionally, a valuable quantity of manganese may be present in the aqueous feed solution, which the process rejects as waste upon the formation of the mixed metal sulphide. One further drawback of this process is the need to construct an ammonium sulphate plant, which further adds to the complexity and cost of the process.

US 5,378,262 describes the selective recovery of metals such as nickel and cobalt from solutions also containing other metals such as manganese, calcium, and magnesium. The aqueous solution is contacted with a water-immiscible organic solution containing a dithiophosphinic acid extractant which selectively extracts both nickel and cobalt, rejecting manganese and other ions in the aqueous phase. Once again a valuable quantity of manganese may be present which is consequently lost from the process as waste.

Another disadvantage of the process of US 5,378,262 is that an excess of very strong acid, such as concentrated hydrochloric acid, is required to affect efficient nickel stripping. This results in a mixed hydrochloric acid/nickel chloride strip solution from which it is difficult to generate a commercial nickel product using established processes such as electrowinning or hydrogen reduction.

A further disadvantage of the process of US 5,378,262 is that ions such as copper and chromium are preferably removed prior to the solvent extraction step to avoid extractant degradation. Techniques such as ion exchange on the head flow for copper removal are typically expensive and further add to the complexity of the process.

US 5,976,218 describes a process in which a multi-element aqueous solution containing nickel and cobalt ions is processed by first producing a bulk mixed nickel/cobalt hydroxide intermediate. The mixed hydroxide is then releached in an ammoniacal solution where the nickel is recovered by solvent extraction and electrowinning. Such a process, which employs bulk solids generation and handling, coupled with bulk use of dangerous gases such as ammonia and carbon dioxide, is technically difficult and costly. Additionally, often present in a valuable quantity is manganese, which the above process rejects as waste upon the formation of the mixed hydroxide.

Although manganese may be present in economical amounts in the feed solution, none of the foregoing processes attempt to recover the manganese as a valuable product. The forgoing processes additionally have the drawbacks of either involving the formation of a bulk intermediate mixed nickel/cobalt solid, or are unable to economically produce nickel metal by standard techniques such as electrowinning or hydrogen reduction. Therefore a welcome contribution to the art would be a method that allows the recovery of nickel and/or cobalt as well as the production of a valuable manganese product should manganese be present in economical quantities; that does not involve the formation a bulk nickel/cobalt intermediate solid, and that economically allows nickel to be produced by standard techniques such as electrowinning or hydrogen reduction.

A process for separating nickel and cobalt present in a sulphate solution is known from US 4,148,631 BABJAK. A concentrated solution of nickel chloride is used to displace cobalt from an organic extractant loaded with nickel and cobalt ions. The nickel enriched organic phase is preferentially stripped using sulphuric acid in an electrowinning circuit to produce nickel metal. Cobalt ions displaced into the nickel chloride solution undergo further extraction as a chloro-anionic complex using a tertiary amine or quaternary amine resin.

The applicant has found a way to enrich the nickel loading of an organic extractant solution and has found that this can usefully be used in a comparatively simple method of recovering nickel and other metals from complex metal containing solutions.

It is therefore an object of this invention to provide a solvent extraction process for recovering nickel and other metals from an aqueous solution, or to at least provide a useful alternative to known processes.

### STATEMENTS OF INVENTION

In a first aspect of the invention there is provided a process for enriching an organic extractant solution with nickel ions including the steps:
a) mixing a water-immiscible organic extractant solution loaded with nickel ions and non-nickel metal ions with an aqueous nickel chloride solution so that nickel ions from the aqueous nickel chloride solution replace at least some of the non-nickel metal ions in the organic extractant solution to give an organic extractant solution enriched with nickel ions;
b) separating the organic extractant solution enriched with nickel ions from the aqueous nickel chloride solution; and
c) continuously recycling the aqueous nickel chloride solution within the process maintaining the concentration of nickel ions in the aqueous nickel chloride solution at a level of greater than 50 g/L by adding hydrochloric acid in a sufficient quantity to maintain that concentration.

In one preferred embodiment of the invention, the hydrochloric acid is added to the nickel chloride solution in step a).

In another preferred embodiment of the invention, the process further includes the step of extracting nickel ions from the organic extractant solution enriched with nickel ions. Other metal ions may also be extracted from the organic extractant solution enriched with nickel ions.

In another preferred embodiment of the invention, the process further includes the step of extracting non-nickel metal ions from the aqueous solution. The non-nickel metal ions may be cobalt ions, manganese ions, zinc ions, copper ions, iron ions, calcium ions, magnesium ions, aluminium ions, sodium ions, or potassium ions, or any other non-nickel metal ions.

In a further preferred embodiment, aluminium ions, in addition to nickel ions, are extracted from the organic extractant solution enriched with nickel ions.

In another preferred embodiment of the invention, cobalt ions are extracted from the aqueous solution.

In a further preferred embodiment, manganese ions are extracted from the aqueous solution.

Preferably the hydrochloric acid is prepared from chloride ions in the aqueous solution after manganese ions are extracted from the aqueous solution.

In a further preferred embodiment sulphuric acid is added to the aqueous solution to produce the hydrochloric acid which is then recycled back to the nickel chloride solution in step a).

Preferably the extracted metal ions are further processed into metal or metal containing products.

The water-immiscible organic acid extractant solution is a solution of organic extractant in any suitable solvent, but the solvent is preferably an aliphatic or aromatic hydrocarbon solvent, or a mixture thereof. It is further preferred that the solvent is a high flash point aliphatic or aromatic hydrocarbon solvent, or a mixture thereof.

Preferably the organic extractant is selected from carboxylic acids, halogenated carboxylic acids, monothiophosphinic acids, organo-phosphorous acids or mixtures thereof.

Preferably the concentration of chloride ions in the nickel chloride solution is greater than about 100 g/L.

The concentration of nickel ions in the nickel chloride solution is preferably above about 50 grams/L.

Optionally, the nickel chloride solution contains other chlorides such as hydrochloric acid, calcium chloride, magnesium chloride, sodium chloride, potassium chloride, cobalt chloride, manganese chloride, zinc chloride, copper (+2) chloride, copper (+1) chloride, aluminium chloride, or ferrous chloride.

In a preferred embodiment, the process of the first aspect further includes the steps:
d) mixing the organic extractant solution enriched with nickel ions with an acidic aqueous solution so that nickel ions are transferred into the aqueous solution;
e) separating the organic extractant solution from the aqueous solution; and
f) recovering nickel ions from the aqueous solution.

Aluminium ions contained in the organic extractant solution enriched with nickel ions may also be transferred along with nickel ions into the aqueous solution at step c).

Preferably the nickel ions are recovered as nickel metal, for example by electrowinning and/or hydrogen reduction, or as sulphate or chloride salts by crystallisation.

Preferably, the acidic aqueous solution is a solution containing sulphuric acid and/or hydrochloric acid.

In another preferred embodiment, the process of the first aspect further includes the steps:
f) mixing a second organic extractant solution with at least some of the aqueous solution of step b) so that cobalt and/or manganese ions are transferred into the second organic extractant;
g) separating the second organic extractant solution from the aqueous solution;
   and
h) stripping cobalt and/or manganese ions from the second organic extractant solution.

The second organic extractant solution is preferably a solution of an ion pair extractant or a solvating extractant.

In another aspect, the invention also provides an organic extractant solution enriched with nickel ions obtained by the process of the invention.

In a further aspect, the invention provides nickel ions obtained by the process of the invention.

In further aspects, the invention also provides cobalt ions obtained by the process of the invention and manganese ions obtained by the process of the invention.

### BRIEF DESCRIPTION OF DRAWINGS

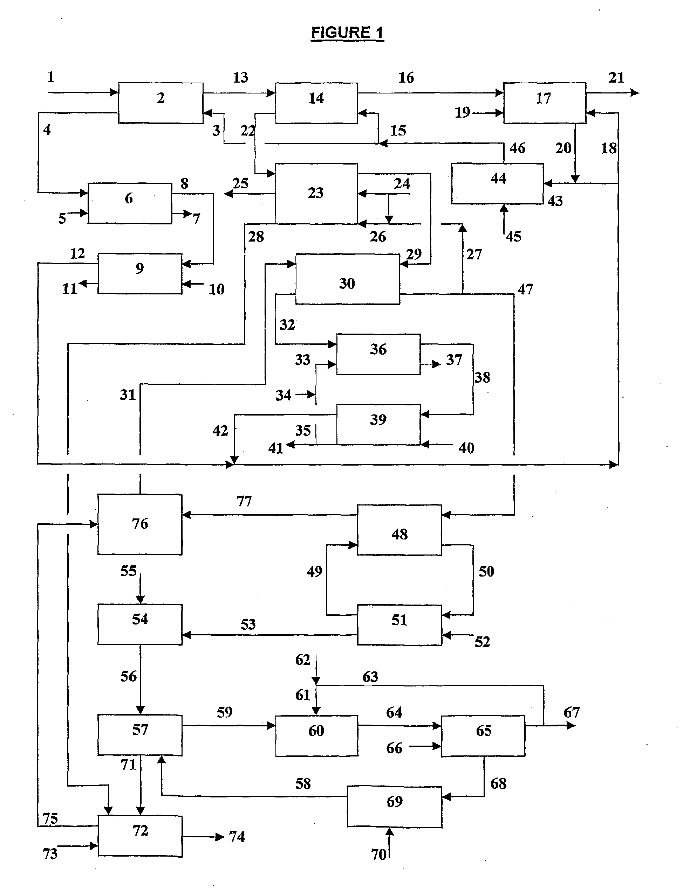

Figure 1 shows a continuous circuit for the extraction of nickel, cobalt, and manganese ions from an aqueous solution containing these ions together with other metal ions.

### DETAILED DESCRIPTION

The invention provides a process for the separation and recovery of valuable metal ions, including cobalt, manganese, nickel, and aluminium, from solutions containing these metal ions.

Unlike existing processes, the process of this invention does not involve the formation of a bulk precipitated intermediate or bulk re-leach steps, and therefore represents a simplified and more economical path to the production of valuable metal products from aqueous solutions relative to existing methods.

Additionally, the process of this invention allows the production of a valuable manganese product should manganese be present in economical quantities, and allows nickel to be produced by standard methods including electrowinning and hydrogen reduction. The main steps of the process are described as follows.

In this description, except where explicitly otherwise indicated, all numbers describing amounts of ingredients or reaction conditions are to be understood as modified by the word "about".

### Step 1: Formation of an Organic Extractant Solution Loaded with Nickel and Other Non-Nickel Metal Ions

The preparation of the organic extractant solution used in this invention typically involves dissolving an organic acid extractant, or any mixture of organic acid extractants, in a suitable water-immiscible solvent. The organic acid extractants can be selected from, but are not limited to, carboxylic acids, halogenated carboxylic acids, organo-phosphorus acids, and monothiophosphinic acids. Examples of the organic acids suitable for use in this invention are listed in Groups 1 to 4 below. Preferably, the solvent is a high flash point aliphatic or aromatic liquid hydrocarbon, or mixtures thereof.

Group 1: Carboxylic Acids
a) Versatic Acid (Shell Chemical)
b) Neodecanoic Acid Prime (Exxon Chemical)
c) AH04/20 Neodecanoic Acid (Castrol)
d) (Z)-9-Octadecenoic Acid
e) Isostearic Acid
f) 2-Octyl-Dodecanoic Acid
g) 2-Hexyl-Decanoic Acid
h) 2-Butyl-Octanoic Acid
i) Naphthenic Acid

Group 2: Halogenated Carboxylic Acids
a) Alpha-Bromo Lauric Acid

Group 3: Organo-Phosphorus Acids
a) Di-2-Ethylhexylphosphoric Acid (DEHPA)
b) 2-Ethylhexyl Phosphonic Acid Mono-2-Ethylhexyl Ester (IONQUEST 801) (Albright & Wilson)
c) Bis(2,4,4-trimethylpentyl)phosphinic Acid (Cyanex 272) (Cytec)

Group 4: Monothiophosphinic Acids
a) Bis(2,4,4-trimethylpentyl)monothiophosphinic Acid (Cyanex 302) (Cytec)

Phase and equilibrium modifiers and anti-oxidants may also be added to the organic extractant solution. Modifiers such as, but not limited, to para-alkylphenols, alkylphosphine oxides, long chain linear or branched alcohols, pyridine carboxylate esters (e.g. 4PC) and various chelating agents (e.g. oximes, diketones, substituted dithiophosphoramides) may act to increase the solubility of the organic acid and/or its metal salts in the organic phase, as well as acting to augment the extraction and stripping properties of the extractant. Anti-oxidants such as butylhydroxytoluene (BHT) may be added to the organic extractant solution to inhibit unwanted oxidation reactions.

Additionally, the organic extractant solution may be washed with an aqueous solution containing reductant to negate the presence of any oxidant species that may be present in the organic extractant solution. Suitable reductants include sodium metabisulphite and sulphur dioxide.

The organic extractant solution is then loaded with nickel ions and other non-nickel metal ions by mixing/contacting the extractant solution with an aqueous feed solution containing nickel and other non-nickel metal ions, such as that generated from the acid leaching of nickel laterites, or the leaching of nickel sulphide containing concentrates. pH control agents such as ammonia and caustic soda may be added to the extractant solution to aid extraction. Alternatively, the organic extractant solution may be pre-loaded with ions such as ammonium, sodium, calcium, or magnesium to aid extraction, if required.

The organic extractant solution loaded with nickel ions and other non-nickel metal ions may also be washed with an aqueous solution containing reductant.

Additionally, the aqueous feed solution may contain reducing agents, which may be beneficial by inhibiting unwanted side reactions such as manganese and cobalt oxidation. Reducing agents are preferably selected from sodium metabisulphite, sulphur dioxide, ferrous ions, copper (+1) ions, and mixtures thereof.

Anti-scalants such as, but not limited to, polyphosphates may also be added to the aqueous feed solution to inhibit the formation of scale on process equipment.

### Step 2: Displacing the Non-Nickel Metal Ions from the Organic Extractant Solution Using an Aqueous Nickel Chloride Solution

The organic extractant solution produced in Step 1 is then mixed/contacted with an aqueous solution containing nickel chloride which acts to displace the non-nickel metal ions from the organic phase in exchange for nickel ions from the nickel chloride solution. This reaction removes the bulk of the non-nickel metal ions present in the extractant solution and further loads the extractant solution with nickel ions. The reaction is described by reaction 1, using cobalt as an example.

Reaction 1: R₂Co_{(org)} + Ni⁺²_{(aq)} → R₂Ni_{(org)} + CO⁺²_{(aq)}

Preferably the concentration of chloride ions in the nickel chloride solution is greater than about 100 g/L. Due to the high concentration of chloride ions in the nickel chloride solution, the metal ions displaced from the extractant solution may form a series of metal-chloride complexes in the nickel chloride solution as indicated in reaction 2, again using cobalt as an example.

Reaction 2: Co⁺²_{(aq)} + nCl⁻_{(aq)} → CoClₙ⁽²⁻ⁿ⁾_{(aq)}

Those metal ions that are displaced, but do not significantly form chloro-complexes (such as calcium and magnesium), may be regulated at a particular concentration by removing an appropriate amount of the nickel chloride solution. Those metals that do significantly form chloro-complexes are typically amenable to extraction from the nickel chloride containing solution, in the form of their chloride salts, as is outlined in Step 3 below.

The aqueous nickel chloride solution is continuously recycled within the process and may contain other chlorides including, but not limited to, hydrochloric acid, calcium chloride, magnesium chloride, sodium chloride, potassium chloride, cobalt chloride, manganese chloride, zinc chloride, copper (+2) chloride, copper (+1) chloride, aluminium chloride and ferrous chloride.

Hydrochloric acid is added to the nickel chloride solution in sufficient quantity to maintain the aqueous nickel chloride concentration at a desired level, this typically being greater than about 50 g/L of nickel. Hydrogen ions serve to displace nickel ions, and other metal ions, from the extractant solution as outlined by reaction 3.

Reaction 3: 2H⁺_{(aq)} + R₂Ni_{(org)} → 2RH_{(org)} + Ni⁺²_{(aq)}

The addition of hydrochloric acid therefore provides a convenient method of maintaining the nickel chloride concentration in the recycled nickel chloride solution. However, the concentration of nickel chloride may be maintained via any other means, such as direct addition of nickel chloride in solution and/or solid form.

Further processing of the nickel loaded organic extractant solution preferably involves one or more washing and acid stripping steps to yield an aqueous solution of substantially pure nickel salt (e.g. sulphate or chloride) suitable for processing into a saleable nickel product. Mineral acids suitable for stripping nickel from the organic phase include sulphuric and hydrochloric acids for example. The stripped extractant solution is preferably recycled for consecutive nickel loading steps.

The one or more washing steps may be useful to remove any nickel chloride still present in the extractant solution, optionally along with further purification of the extractant solution by way of cation exchange. The wash solution is preferably generated by taking a small amount of the substantially pure nickel salt solution, produced from the acid stripping step, and diluting it with water to a desired point.

Sulphuric acid stripping of the nickel loaded extractant solution will produce a substantially pure nickel sulphate solution, suitable for further processing into nickel by methods such as electrowinning and hydrogen reduction.

The process may also be operated to extract aluminium ions from the aqueous feed solution referred to in Step 1. Aluminium ions may be transferred from the aqueous feed solution, into the organic extractant solution in Step 1. Aluminium is one of the few metals that is not significantly displaced from the organic extractant solution by the nickel chloride solution in Step 2. These ions may to some extent be co-stripped, along with nickel ions, into the aqueous nickel salt solution, thereby supplying aluminium ions for the electrowinning process.

The aqueous nickel solution, containing some aluminium, may be sent to electrowinning to plate out nickel metal (the nickel cathode). It is known that elevated concentrations of aluminium ions in the plating bath exert a buffering effect similar to that of boric acid. At sufficient concentration, the aluminium ions do not deteriorate the nickel cathode quality and may act as a replacement to boric acid. Thus, the presence of sufficient aluminium ions (which themselves do not plate) during the nickel electrowinning process may act to aid the production of good quality nickel cathode.

### Step 3: Extracting Chloride Salts from the Nickel Chloride Solution

The high chloride ion concentration in the nickel chloride solution promotes the formation of metal-chloride complexes as described in Step 2, such as the chloro-complexes of zinc, copper, cobalt and manganese. Cobalt and manganese can be recovered from the aqueous nickel chloride solution obtained in Step 2 by extracting them as their chloride salts from this solution.

The organic extractants used in this step of the invention include ion pair extractants and solvating extractants. Examples of suitable ion pair extractants and solvating extractants are listed in Groups 1 and 2, respectively.

Group 1: Ion Pair Extractants
b) Quarternary amines such as Aliquat 336 (Cognis Corporation)
c) Tertiary amines such as Alamine 336 and Alamine 308 (Cognis Corporation)

Group 2: Solvating Extractants
a) Alkylphosphine oxides such as Cyanex 923 (Cytec)
b) Alkylphosphates such as tributylphosphate (TBP)
c) Alkylphosphonates such as di-butyl butylphosphonate (DBBP)

Typically, an extractant, or any mixture of extractants, is dissolved in a suitable water-immiscible solvent to produce an organic extractant solution prior to use. The solvent is preferred to be a high flash point aliphatic or aromatic liquid hydrocarbon, or mixtures thereof.

Phase and equilibrium modifiers and anti-oxidants may be added to the organic extractant solution. Modifiers such as para-alkylphenols, alkylphosphine oxides and long chain linear or branched alcohols may act to increase the solubility of the organic extractant and/or its metal salts in the extractant solution, as well as acting to augment the extraction and stripping properties of the extractant. Anti-oxidants such as butylhydroxytoluene (BHT) may be added to the extractant solution to inhibit unwanted oxidation reactions.

When ion pair extractants are used, the metal-chloride complex is extracted into the organic phase, which in turn releases chloride ions into the aqueous phase. These reactions are indicated in reactions 4 and 5, using a tertiary amine and cobalt and manganese as examples.

Reaction 4: 2R₃N.HCl_{(org)} + COCl₄⁻²_{(aq)} → (R₃N.H)₂CoCl_{4(org)} + 2Cl⁻_{(aq)}

Reaction 5: 2R₃N.HCl_{(org)} + MnCl₄⁻²_{(aq)} → (R₃N.H)₂MnCl_{4(org)} + 2Cl⁻_{(aq)}

After separating the organic extractant solution from the nickel chloride solution, the loaded extractant solution may be washed and then stripped of its metal salts by contact with aqueous solutions containing suitably low chloride content to allow the stripping reaction. The stripping reaction is indicated by reactions 6 and 7, using a tertiary amine and cobalt and manganese as examples.

Reaction 6: (R₃N.H)₂CoCl_{4(org)} + Water → 2R₃N.HCl_{(org)} + CoCl_{2(aq)}

Reaction 7: (R₃N.H)₂MnCl_{4(org)} + Water → 2R₃N.HCl_{(org)} + MnCl_{2(aq)}

The one or more wash steps may be useful to remove any nickel chloride still present in the extractant solution, optionally along with further purification of the extractant solution by way of anion exchange. The wash solution is preferably generated by diverting some portion of the cobalt chloride and/or manganese chloride strip product to the washing step.

As a consequence of adjusting the organic to aqueous ratios in the process, the metal chloride solution produced after the stripping step may contain cobalt and/or manganese ions at much higher concentrations than that present in the aqueous feed solution. The cobalt and manganese concentration in the metal chloride solution may be many times (in the order of a hundred or more) that in the aqueous feed solution. Advantage may be taken of this to reduce the amounts of copper and zinc chlorides in the metal chloride solution. Typically, both copper and zinc are extracted more strongly from chloride systems, and consequently these ions may be mostly held in the organic phase during cobalt and manganese stripping.

After the stripping step, a bleed stream of the extractant solution may be taken to regulate the concentrations of copper, zinc and any other species that may build up in the organic phase. The bleed is typically treated to remove these metals, with the organic phase being recycled for consecutive loading and stripping cycles.

### Step 4: Production of a Cobalt Product

The metal chloride solution produced in Step 3 typically contains cobalt and/or manganese salts as the major components. A cobalt product may be produced from this solution by one or more known techniques involving selective precipitation or further selective extraction using liquid or solid ion-exchange reagents. One convenient method to produce a high purity cobalt product involves the addition of sulphide which acts to selectively precipitate cobalt sulphide (CoS) from the strip product as indicated by reaction 8.

Reaction 8: Co⁺²_{(aq)} + S⁻²_{(aq)} → CoS₍ₛ₎

It is important to control the pH during the cobalt sulphide precipitation to avoid manganese sulphide from precipitating. Subject to the precipitation reaction conditions (such as ionic strength and temperature), typically maintaining the pH between 2.5 and 3.5 will result in near quantitative cobalt removal, while not precipitating any significant amounts of manganese sulphide, thus yielding high purity cobalt sulphide.

Sulphide reagents suitable for the precipitation include disodium sulphide (Na₂S), sodium hydrosulphide (NaSH), hydrogen sulphide (H₂S), calcium sulphide, and polysulphides (e.g. CaS). Preferably, pH is maintained between a target range by pH control agents, namely acids and bases. Additionally, a pH buffer may be added to the system to help maintain precipitation within the desired pH range.

### Step 5: Production of a Manganese Product

Manganese may also be produced from the metal chloride solution produced in Step 3 by one or more known techniques involving precipitation or further selective extraction using liquid or solid ion-exchange reagents. One convenient method, leading to a range of valuable manganese products, involves the use of organic extractants to selectively extract manganese ions, followed by washing and acid stripping of the manganese loaded organic phase, to yield a concentrated, high purity manganese solution.

The organic extractants suitable for this embodiment of the invention are those described in Step 1. The extractants are preferably dissolved in a suitable water immiscible solvent to give an organic extractant solution, as also described in Step 1.

A manganese loaded extractant solution may be formed by mixing/contacting the extractant solution with the cobalt free manganese chloride solution generated in Step 4. The addition of pH control agents such as ammonia and caustic soda may be employed to aid extraction, or the organic extractant phase may be pre-loaded with ions such as ammonium, sodium, calcium or magnesium to aid extraction, if required. For economic reasons, the extractant solution is preferably pre-equilibrated with calcium ions, using lime or calcium hydroxide, via a pre-dissolution method to avoid fouling of the extractant. Such a method is described in US 6,692,709.

The calcium loaded extractant solution extracts manganese ions from the manganese chloride solution, in exchange for the release of calcium ions to the aqueous solution, resulting in an extractant solution loaded with manganese ions, as indicated by reaction 9.

Reaction 9: R₂Ca_{(org)} + Mn⁺²_{(aq)} → R₂Mn_{(org)} + Ca⁺²_{(aq)}

As manganese selectivity over calcium is desirable, the extractant solution is preferably either Cyanex 272, Cyanex 302, or any other extractant system that is sufficiently selective for manganese over calcium.

Further processing of the manganese loaded extractant solution preferably involves one or more washing and acid stripping steps to yield an aqueous solution of substantially pure manganese salt (sulphate or chloride etc) suitable for processing into a range of valuable manganese products. Mineral acids suitable for stripping manganese from the extractant solution include sulphuric and hydrochloric acids for example. The stripped extractant solution is preferably recycled for consecutive manganese loading steps.

The one or more washing steps may be useful to remove any chlorides still present in the extractant solution, optionally along with further purification of the extractant solution by way of cation exchange. The wash solution is preferably generated by taking a small amount of the substantially pure manganese salt solution, produced from the stripping step, and diluting it with water to a desired point.

The use of sulphuric acid to strip the manganese loaded organic phase may produce several potentially valuable manganese products such as:
a) hydrated manganese sulphate crystal, which is useful as an industrial chemical reagent and as the most important of the manganese based fertilizers;
b) manganese metal, which is also used as an industrial chemical reagent and as an alloying agent with other metals, and may be made by the electrolysis of manganese sulphate solutions which typically generate manganese in the form of a metallic flake; and
c) electrolytic manganese dioxide (EMD), which may be formed from a manganese sulphate solution by a specialsed electrolytic process and is employed as a depolariser in dry cell batteries.

Processes involving electrolysis (e.g. b) & c) above) will typically produce a solution depleted in manganese and rich in sulphuric acid. Such a solution may be recycled by using it to strip the manganese loaded organic phase to produce a manganese rich solution which is used in the electrolytic processing.

### Step 6: Chloride Recycling

The chloride solution, generated after the extraction of manganese ions in Step 5, may be processed to generate hydrochloric acid which is used by the process of the invention. The addition of sulphuric acid to chloride salts and solutions thereof is well established as a method for generating hydrochloric acid. Typically, hydrogen chloride gas will be generated which is subsequently adsorbed into aqueous solution to make hydrochloric acid which can be recycled back into the process. Reaction 10 describes the hydrochloric acid formation reaction in general terms where a divalent metal chloride is used as an example.

Reaction 10: H₂SO_{4(l/aq)} + MCl_{2(s/aq)} → 2HCl_{(aq/gas)} + MSO_{4(aq/s)}

In some instances, it may be desirable to use an excess of sulphuric acid to help drive the formation of HCl. Should this be the case, the resulting metal sulphate/acid mixture may be recycled back into the process, for example into the initial nickel ore leaching step.

### EXAMPLES

The invention is further described, by way of example only, in Figure 1 and in Examples 1 to 5. It is to be appreciated that the invention relates to only a portion of the extraction process described below and shown in Figure 1. The invention is not to be limited in any way by additional process steps shown in Figure 1, or by the omission of any process steps from Figure 1.

Figure 1 outlines a continuous circuit for the extraction of nickel, cobalt, and manganese ions from an aqueous solution containing these ions together with other metal ions.

The circuit depicted in Figure 1 begins with an aqueous feed solution (1) containing nickel, cobalt, manganese, copper, zinc, iron, aluminium, calcium, and magnesium ions. The aqueous feed solution proceeds to a pre-extraction stage (2) where a small amount of an organic extractant solution (3) is introduced and mixed into the aqueous solution. The organic extractant solution contains an organic extractant and an organic solvent, and is loaded with magnesium ions. During mixing, magnesium ions from the organic extractant solution are exchanged with other metal ions in the aqueous solution. Sufficient organic extractant solution is introduced into the aqueous solution to extract the bulk of ferric ions and copper ions from the aqueous solution, while only small amounts of other metal ions are extracted into the organic extractant solution. Thus, after mixing, the organic extractant solution is no longer loaded primarily with magnesium ions and instead comprises an organic extractant solution loaded with ferric ions and copper ions, together with various amounts of other metal ions.

After allowing the aqueous and organic phases to separate, the organic extractant solution (4) is introduced to a sulphuric acid stripping step, where sufficient aqueous sulphuric acid solution (5) is mixed (6) with the organic extractant solution to strip some or all of the copper and zinc ions from the organic extractant solution, while not stripping any significant amount of ferric ions. The aqueous and organic phases are again allowed to separate.

The copper/zinc sulphate solution (7) generated by the sulphuric acid stripping step may be further processed by known techniques, such as the use of oxime type extractants in closed circuit with acid stripping and electrowinning, to recover the copper ions.

The partially stripped organic extractant solution (8) then undergoes a stronger sulphuric acid stripping step involving an increased concentration of acid (9), where a sulphuric acid solution (10) is mixed with the organic extractant solution to strip ferric and other remaining metal ions. After phase separation, the spent sulphuric acid solution (11), typically containing an excess of acid, may be recycled for leaching or for other uses within the process. The stripped organic extractant solution (12) is then recycled for consecutive extraction steps.

The raffinate produced from the pre-extraction step (13) is subjected to a series of bulk metal extraction steps (14) where some or all of the nickel, cobalt, manganese and aluminium ions in the aqueous raffinate are extracted by an organic extractant solution (15), again loaded with magnesium ions and which may have been washed with a reductant solution prior to the bulk metal extraction step. The aqueous and organic phases are then allowed to separate.

The organic extractant solution (22) then undergoes a series of washing steps (23) (see below). The aqueous raffinate (16) is subjected to an extractant recovery step (17) where an amount of stripped organic extractant solution (18) is mixed with the raffinate and a sufficient amount of sulphuric acid (19) to protonate any extractant lost into the raffinate, thereby recovering that lost extractant back into an organic phase. After phase separation, the organic extractant solution (20) is recycled back into the process for consecutive extraction steps. Some or all of the raffinate (21) from the extractant recovery step may be recycled back into the process for various duties at any step in the circuit.

During the bulk metal extraction steps (14), the organic extractant solution used in these steps is loaded with nickel, cobalt, and manganese ions (22). Following the bulk metal extraction steps, this loaded organic extractant solution undergoes a series of washing steps (23) whereby water (24) may be used to displace to some extent any aqueous entrainment present in the organic extractant solution. Optionally, the water (24) may contain aqueous reductants such a sodium metabisulphite and/or sulphur dioxide. After separation of the phases, the spent wash water (25) may be recycled back into the aqueous feed solution or for other uses within the circuit.

Further washing of the organic extractant solution may take place using a solution (26) composed of water (24) and a small amount of the loaded nickel chloride solution (27) produced by the purification step (30) (see below). During this further washing, some ions in the organic extractant solution, such as magnesium and calcium, may be exchanged with nickel ions from the nickel chloride solution, thus loading the organic extractant solution with nickel ions and purifying the organic extractant solution to some extent. After separation of the phases, the spent nickel chloride solution (28) proceeds to an HCl generation step (72) (see below).

The washed organic extractant solution (29) then proceeds through a series of purification steps. In the first purification step (30) the organic extractant solution is mixed with a nickel chloride solution (31) which causes some ions in the organic extractant solution, such as cobalt, manganese, zinc, copper, magnesium and calcium, to be exchanged with nickel ions from the nickel chloride solution, thus loading the organic extractant solution with nickel ions and purifying the organic extractant solution. After phase separation, the purified nickel loaded organic extractant solution (32) is mixed with a solution (33) composed of water (34) and a small amount of substantially pure nickel sulphate solution (35). This second purification step (36) may displace to some extent any aqueous entrainment present in the nickel loaded organic extractant solution, in addition to displacing to some extent any residual impurities. After separation of the phases, the spent wash.solution (37) may be recycled back into the aqueous feed solution.

The washed and purified nickel loaded organic extractant solution (38) then proceeds to an acid stripping step (39) where it is mixed with a sulphuric acid solution (40) to strip the nickel ions from the organic extractant solution. After stripping, the resultant substantially pure nickel sulphate solution (41) may be further processed to produce a nickel product, for example by electrowinning or by hydrogen reduction.

The stripped organic extractant solution (42) is then recycled for use in consecutive extraction steps. The stripped organic extractant solution (43) proceeds to a magnesium loading step (44) where magnesia (MgO) or magnesium hydroxide (Mg(OH)₂) are added (45) to load magnesium into the organic extractant solution. This is preferably achieved via a pre-dissolution technique to avoid fouling of the organic extractant solution with solids. The organic extractant solution is thus loaded with magnesium ions (46), which can be used as an extractant for consecutive bulk extraction steps.

The nickel chloride solution (47) produced in the organic extractant solution purification step (30) proceeds through a series of metal chloride extraction steps (48) where an organic extractant solution (49), produced by a series of stripping steps (51) (see below), is introduced into and mixed with the nickel chloride solution. Chloride salts such as cobalt chloride, manganese chloride, copper chloride, and zinc chloride are extracted into the organic extractant solution during mixing. After phase separation, the organic extractant solution (50) undergoes a series of stripping steps (51) where water (52) is used to strip cobalt and manganese chloride from the organic extractant solution into the aqueous phase. The stripping agent is sufficiently concentrated to inhibit, for the most part, the stripping of zinc and copper chlorides. The resulting cobalt-manganese chloride solution (53) proceeds to a cobalt sulphide production step (54), where a source of sulphide is added, such as disodium sulphide (55).

After separation of the cobalt sulphide product, the resulting cobalt barren solution (56) proceeds to a manganese extraction step (57), whereas the stripped organic extractant solution (49) is recycled for consecutive extraction steps, with a small amount of organic extractant solution (not shown) being taken to control the buildup of metals not stripped during the stripping step (51). During the manganese extraction step an organic extractant solution loaded with calcium ions (58) is used to extract manganese ions from the cobalt barren solution in exchange for the release of calcium ions into the aqueous solution. Thus, the calcium loaded organic extractant solution is loaded with manganese ions (59).

After phase separation, the manganese loaded organic extractant solution proceeds to a series of washing steps (60), where a wash solution (61) made up of water (62) and a small amount of substantially pure manganese sulphate solution (63), is mixed with the manganese loaded organic extractant solution. This step of washing may be useful to displace to some extent any aqueous entrainment present in the organic extractant solution, in addition to displacing to some extent any residual impurities.

The washed manganese loaded organic extractant solution (64) then proceeds through a series of acid stripping steps (65) where it is mixed with a sulphuric acid solution (66) which strips the manganese ions from the organic extractant solution. The sulphuric acid solution is thereby converted into a substantially pure manganese sulphate solution (67). After separation, the manganese sulphate solution may be further processed to produce a variety of manganese products including manganese sulphate crystal, manganese metal, and electrolytic manganese dioxide (EMD). The stripped organic extractant solution (68) proceeds to a calcium loading step (69) where lime (CaO) or hydrated lime (Ca(OH)₂) is added (70) to load calcium into the organic extractant solution. This is preferably achieved via a pre-dissolution technique to avoid fouling of the organic extractant solution with solids. The calcium loaded organic extractant solution (58) is recycled for consecutive manganese extraction steps.

Manganese barren chloride solution (71), produced during the manganese extraction step (57), together with the spent chloride stream (28), produced during the washing steps (23), proceeds to a hydrochloric acid generation step (72) where sulphuric acid (73) is added to drive the reaction. The resulting chloride barren waste stream (74), which may contain an excess of acid, may be sent to various uses within the circuit to make use of any acid present in the stream. One example is to use the stream as a source of leaching acid for generation of the aqueous feed solution, which also has the advantage of recycling any value metal ions which may be present in the stream.

A portion of the recovered hydrochloric acid (75) proceeds to a nickel chloride make-up step (76) where it is combined with barren nickel chloride solution (77) generated from the metal chloride extraction step (48).

### Example 1

This example illustrates the use of a concentrated nickel chloride solution to remove the bulk of metal ions from a metal loaded organic extractant solution in a single mixing step.

A sample of 20 wt% Versatic Acid (TM Shell Chemical) in Shellsol D70 (diluent) was loaded with nickel and other metal ions via cation exchange to give an organic extractant solution which was found to contain 48.6 mg/L Ca⁺², 488 mg/L Co⁺², 220 mg/L Mg⁺², 832 mg/L Mn⁺², 74.9 mg/L Zn⁺² and 8,390 mg/L Ni⁺².

The loaded organic extractant solution was then mixed (at 40°C +/- 2°C) for 10 minutes at a 1:1 volumetric ratio with a nickel chloride solution found to contain 5,490 mg/L Ca⁺², <0.01 mg/L Co⁺², 21,900 mg/L Mg⁺², 74.4 mg/L Mn⁺², 102.5 mg/L Zn⁺², 174,000 mg/L Ni⁺² and ∼5g/L HCl prior to mixing (all salts being present as chlorides).

Upon cessation of mixing, the aqueous and organic phases separated within 60 seconds. The organic phase was found to contain 4.8 mg/L Ca⁺², 5.98 mg/L Co⁺², 1.8 mg/L Mg⁺², 7.13 mg/L Mn⁺², 0.45 mg/L Zn⁺² and 7,190 mg/L Ni⁺². Thus, the single mixing step removed more than 90% of the calcium ions, more than 98% of the cobalt ions, more than 99% of the magnesium ions, more than 99% of the manganese ions and more than 99% of the zinc ions initially present in the organic extractant solution. Some nickel was displaced from the organic extractant solution, into the nickel chloride solution, due to the deliberate presence of hydrochloric acid in the nickel chloride solution.

### Example 2

This example illustrates the use of a concentrated nickel chloride solution to remove the bulk of metal ions from a metal loaded organic extractant solution in a single mixing step. In this example the extractant was washed with sodium metabisulphite solution before metals extraction.

A sample of 25 wt% Versatic Acid (TM Shell Chemical) in Shellsol D70 (diluent), also containing approximately 4 grams/L BHT was loaded with magnesium ions. The magnesium loaded organic extractant was then washed with aqueous sodium metabisulphite solution to remove any residual oxidants. The washed magnesium loaded organic extractant was then used to extract nickel and other metal ions via cation exchange. The loaded organic thus formed was found to contain 381 mg/L Ca⁺², 569 mg/L Co⁺², 4.3 mg/L Cu^{+1/+2}, 782 mg/L Mg⁺², 1,340 mg/L Mn⁺², 30.1 mg/L Zn⁺² and 4,750 mg/L Ni⁺².

The loaded organic extractant solution was then mixed (at 40°C +/- 2°C) for 10 minutes at a 1:1 volumetric ratio with a nickel chloride solution found to contain 8,120 mg/L Ca⁺², 70 mg/L Co⁺², 2 mg/L Cu⁺², 19,300 mg/L Mg⁺², 280 mg/L Mn⁺², 10 mg/L Zn⁺², 187,500 mg/L Ni⁺² and ∼0.01 g/L HCl prior to mixing (all salts being present as chlorides).

Upon cessation of mixing, the aqueous and organic phases separated within 110 seconds. The organic phase was found to contain 5 mg/L Ca⁺², 6.7 mg/L Co⁺², 0.4 mg/L Cu^{+1/+2}, 3 mg/L Mg⁺², 3.2 mg/L Mn⁺², 0.2 mg/L Zn⁺² and 8,570 mg/L Ni⁺². Thus, the single mixing step removed more than 98.5% of the calcium ions, more than 98.5% of the cobalt ions, more than 90.5% of the copper ions, more than 99.5% of the magnesium ions, more than 99.5% of the manganese ions and more than 99% of the zinc ions initially present in the organic extractant solution. As hydrochloric acid was essentially absent during the purification process, nickel was loaded into the organic extractant solution, from the nickel chloride solution.

### Example 3

This example is essentially the same as Example 2, except that an alternative extractant was used.

A sample of 25 wt% Neodecanoic Acid Prime (TM, Exxon Chemical) in Shellsol D70 (diluent), also containing approximately 4 grams/L BHT was loaded with magnesium ions. The magnesium loaded organic extractant was then washed with aqueous sodium metabisulphite solution to remove any residual oxidants. The washed magnesium loaded organic extractant was then used to extract nickel and other metal ions via cation exchange. The loaded organic thus formed was found to contain 404 mg/L Ca⁺², 541 mg/L Co⁺², 2.5 mg/L Cu^{+1/+2}, 947 mg/L Mg⁺², 1,365 mg/L Mn⁺², 31.0 mg/L Zn⁺² and 4,520 mg/L Ni⁺².

The loaded organic extractant solution was then mixed (at 40°C +/- 2°C) for 10 minutes at a 1:1 volumetric ratio with a nickel chloride solution found to contain 8,120 mg/L Ca⁺², 70 mg/L Co⁺², 2 mg/L Cu⁺², 19,300 mg/L Mg⁺², 280 mg/L Mn⁺², 10 mg/L Zn⁺², 187,500 mg/L Ni⁺² and ∼0.01 g/L HCl prior to mixing (all salts being present as chlorides).

Upon cessation of mixing, the aqueous and organic phases separated within 70 seconds. The organic phase was found to contain 3 mg/L Ca⁺², 6.3 mg/L Co⁺², 0.3 mg/L Cu^{+1/+2}, 2 mg/L Mg⁺², 1.1 mg/L Mn⁺², 0.2 mg/L Zn⁺² and 9,200 mg/L Ni⁺². Thus, the single mixing step removed more than 99% of the calcium ions, more than 98.5% of the cobalt ions, approximately 88% of the copper ions, more than 99.5% of the magnesium ions, more than 99.5% of the manganese ions and more than 99% of the zinc ions initially present in the organic extractant solution. As hydrochloric acid was essentially absent during the purification process, nickel was loaded into the organic extractant solution, from the nickel chloride solution.

### Example 4

This example illustrates the use of an ion pair extractant to extract cobalt and manganese chlorides from a nickel chloride solution, thus offering a convenient method for the production of cobalt and manganese.

An ion pair organic extractant solution containing 35 wt% Alamine 336, 15 wt% Isotridecanol (phase modifier) in Recosol 150 (aromatic diluent) was contacted with HCl solution (in excess) to prepare the organic extractant solution. The HCl solution acts to protonate the basic amine (R₃N) with an HCl adduct, thus forming the active extractant R₃N.HCl.

The organic extractant solution was then mixed (at 40°C +/- 2°C) for 6 minutes at a 2:1 aqueous to organic volumetric ratio with a nickel chloride solution. Prior to mixing the nickel chloride solution initially contained 7,240 mg/L Ca⁺², 920 mg/L Co⁺², 18,600 mg/L Mg⁺², 4,190 mg/L Mn⁺², <10 mg/L Zn⁺² and 187,500 mg/L Ni⁺² (with all salts being present as chlorides).

After cessation of mixing, the phases separated within 60 seconds. The nickel chloride solution was found to contain 30 mg/L Co⁺² and 1,740 mg/L Mn⁺². Thus, greater than 96.5% cobalt extraction and greater than 58% manganese extraction was achieved. The loaded organic extractant solution was consequently stripped using water to produce a mixed cobalt and manganese chloride solution suitable for further processing.

### Example 5

This example illustrates the use of a solvating extractant to extract cobalt and manganese chorides from a nickel chloride solution, thus offering a convenient method for the production of cobalt and manganese.

An organic solvating extractant solution containing 35 wt% Cyanex 923 in Recosol 150 (aromatic diluent) was mixed (at 40°C +/- 2°C) for 6 minutes at a 2:1 aqueous to organic volumetric ratio with a nickel chloride solution. Prior to mixing, the nickel chloride solution contained 7,240 mg/L Ca⁺², 920 mg/L Co⁺², 18,600 mg/L Mg⁺², 4,190 mg/L Mn⁺², <10 mg/L Zn⁺² and 187,500 mg/L Ni⁺² (with all salts being present as chlorides).

After mixing and phase separation, the nickel chloride solution was found to contain 30 mg/L Co⁺² and 410 mg/L Mn⁺², therefore greater than 96.5% cobalt extraction and greater than 90% manganese extraction was achieved. The loaded organic extractant solution was consequently stripped using water to produce a mixed cobalt and manganese chloride solution suitable for further processing.

### INDUSTRIAL APPLICABILITY

The process of the invention is useful for obtaining valuable metal ions from aqueous solutions. In particular, the process is useful for obtaining nickel, cobalt and/or manganese ions, and optionally other metal ions, from an aqueous solution containing these ions The process is simple and economical relative to existing known processes.

## Claims

1. A process for enriching an organic extractant solution with nickel ions including the steps of:
a) mixing a water-immiscible organic extractant solution loaded with nickel ions and non-nickel metal ions with an aqueous nickel chloride solution so that nickel ions from the aqueous nickel chloride solution replace at least some of the non-nickel metal ions in the organic extractant solution to give an organic extractant solution enriched with nickel ions;
b) separating the organic extractant solution enriched with nickel ions from the aqueous nickel chloride solution; and
c) continuously recycling the aqueous nickel chloride solution within the process maintaining the concentration of nickel ions in the aqueous nickel chloride solution at a level of greater than 50 g/L by adding hydrochloric acid in a sufficient quantity to maintain that concentration.

2. A process as claimed in claim 1 where the hydrochloric acid is added to the nickel chloride solution in step a).

3. A process as claimed in claim 1 further including the step of extracting nickel ions from the organic extractant solution enriched with nickel ions.

4. A process as claimed in claim 3 further including the step of extracting aluminium ions, in addition to nickel ions, from the organic extractant solution enriched with nickel ions.

5. A process as claimed in claim 1 further including the step of extracting non-nickel metal ions from the aqueous solution.

6. A process as claimed in claim 5 where the non-nickel metal ions are cobalt ions, manganese ions, zinc ions, copper ions, iron ions, calcium ions, magnesium ions, aluminium ions, sodium ions, or potassium ions.

7. A process as claimed in claim 6 where the non-nickel metal ions are manganese ions.

8. A process as claimed in claim 7 where the hydrochloric acid is prepared from chloride ions in the aqueous solution after manganese ions are extracted from the aqueous solution.

9. A process as claimed in claim 8 where sulphuric acid is added to the aqueous solution to produce the hydrochloric acid which is then recycled back to the nickel chloride solution in step a).

10. A process as claimed in any one of claims 3 to 9 where the extracted metal ions are further processed into metal or metal containing products.

11. A process as claimed in claim 1 where the water-immiscible organic extractant solution is a solution of organic extractant in an aliphatic or aromatic hydrocarbon solvent, or a mixture of aliphatic and aromatic hydrocarbon solvents.

12. A process as claimed in claim 11 where the organic extractant is a carboxylic acid, halogenated carboxylic acid, monothiophosphinic acid, organo-phosphorous acid, or a mixture thereof.

13. A process as claimed in claim 11 where the solvent is a high flash point aliphatic or aromatic hydrocarbon solvent, or a mixture thereof.

14. A process as claimed in any one of claims 1 to 13 where the concentration of chloride ions in the nickel chloride solution is greater than about 100 g/L.

15. A process as claimed in claim 14 where the concentration of nickel ions in the nickel chloride solution is greater than about 50 g/L.

16. A process as claimed in any one of claims 1 to 15 where the nickel chloride solution additionally contains calcium chloride, magnesium chloride, sodium chloride, potassium chloride, cobalt chloride, manganese chloride, zinc chloride, copper (+2) chloride, copper (+1) chloride, aluminium chloride, or ferrous chloride.

17. A process as claimed in claim 1 further including the steps:
d1) mixing the organic extractant solution enriched with nickel ions with an acidic aqueous solution so that nickel ions are transferred into the aqueous solution;
e1) separating the organic extractant solution from the aqueous solution; and
f1) recovering nickel ions from the aqueous solution.

18. A process as claimed in claim 17 where aluminium ions contained in the organic extractant solution enriched with nickel ions are also transferred along with nickel ions into the aqueous solution at step d).

19. A process as claimed in claim 17 where the nickel ions are further processed into nickel metal.

20. A process as claimed in claim 19 where the nickel ions are further processed into nickel metal by electrowinning and/or hydrogen reduction.

21. A process as claimed in claim 17 where the nickel ions are further processed into nickel sulphate or nickel chloride by crystallisation.

22. A process as claimed in claim 17 where the acidic aqueous solution is a solution containing sulphuric acid and/or hydrochloric acid.

23. A process as claimed in any one of claims 1 to 22 further including the steps:
d2) mixing a second organic extractant solution with at least some of the aqueous solution of step b) so that cobalt and/or manganese ions are transferred into the second organic extractant;
e2) separating the second organic extractant solution from the aqueous solution;
and
f2) recovering cobalt and/or manganese ions from the second organic extractant solution.

24. A process as claimed in claim 23 where the second organic extractant solution is a solution of an ion pair extractant or a solvating extractant.

## Patentansprüche

1. Verfahren zur Anreicherung einer organischen Extraktionsmittellösung mit Nickel-Ionen, umfassend die folgenden Schritte:
a) Mischen einer nicht mit Wasser mischbaren organischen, mit Nickel-Ionen und nichtnickelhaltigen Metall-Ionen beladenen Extraktionsmittellösung mit einer wässrigen Nickelchloridlösung, sodass Nickel-Ionen aus der wässrigen Nickelchloridlösung mindestens einige der nichtnickelhaltigen Metall-Ionen in der organischen Extraktionsmittellösung ersetzen, um eine mit Nickel-Ionen angereicherte organische Extraktionsmittellösung herzustellen;
b) Trennen der mit Nickel-Ionen angereicherten organischen Extraktionsmittellösung von der wässrigen Nickelchloridlösung; und
c) kontinuierliches Recycling der wässrigen Nickelchloridlösung im Prozess unter Beibehaltung der Konzentration von Nickel-Ionen in der wässrigen Nickelchloridlösung auf einem Niveau von mehr als 50 g/L durch das Hinzufügen von Salzsäure in einer ausreichenden Menge zur Aufrechterhaltung dieser Konzentration.

2. Verfahren nach Anspruch 1, wobei die Salzsäure in Schritt a) zu der Nickelchloridlösung hinzugefügt wird.

3. Verfahren nach Anspruch 1, weiter aufweisend den Schritt der Extraktion von Nickel-Ionen aus der mit Nickel-Ionen angereicherten organischen Extraktionsmittellösung.

4. Verfahren nach Anspruch 3, weiter aufweisend den Schritt der Extraktion, zusätzlich zu Nickel-Ionen, von Aluminium-Ionen aus der mit Nickel-Ionen angereicherten organischen Extraktionsmittellösung.

5. Verfahren nach Anspruch 1, weiter aufweisend den Schritt der Extraktion von nichtnickelhaltigen Metall-Ionen aus der wässrigen Lösung.

6. Verfahren nach Anspruch 5, wobei die nichtnickelhaltigen Metall-Ionen Kobalt-Ionen, Mangan-Ionen, Zink-Ionen, Kupfer-Ionen, Eisen-Ionen, Calcium-Ionen, Magnesium-Ionen, Aluminium-Ionen, Natrium-Ionen oder Kalium-Ionen sind.

7. Verfahren nach Anspruch 6, wobei die nichtnickelhaltigen Metall-Ionen Mangan-Ionen sind.

8. Verfahren nach Anspruch 7, wobei die Salzsäure aus Chlorid-Ionen in der wässrigen Lösung hergestellt wird, nachdem Mangan-Ionen aus der wässrigen Lösung extrahiert worden sind.

9. Verfahren nach Anspruch 8, wobei Schwefelsäure zur wässrigen Lösung hinzugefügt wird, um die Salzsäure zu erzeugen, die anschließend in Schritt a) zurück zur Nickelchloridlösung recycelt wird.

10. Verfahren nach einem der Ansprüche 3 bis 9, wobei die extrahierten Metall-Ionen weiter zu Metallprodukten oder metallhaltigen Produkten verarbeitet werden.

11. Verfahren nach Anspruch 1, wobei die nicht mit Wasser mischbare organische Extraktionsmittellösung eine Lösung von organischem Extraktionsmittel in einem aliphatischen oder aromatischen Kohlenwasserstoff-Lösemittel oder eine Mischung aus aliphatischen oder aromatischen Kohlenwasserstoff-Lösemitteln ist.

12. Verfahren nach Anspruch 11, wobei das organische Extraktionsmittel eine Carbonsäure, halogenierte Carbonsäure, Monothiophosphinsäure, organophosphorige Säure oder eine Mischung daraus ist.

13. Verfahren nach Anspruch 11, wobei das Lösemittel ein aliphatisches oder aromatisches Kohlenwasserstoff-Lösemittel mit hohem Flammpunkt bzw. eine Mischung daraus ist.

14. Verfahren nach einem der Ansprüche 1 bis 13, wobei die Konzentration von Chlorid-Ionen in der Nickelchloridlösung größer als etwa 100 g/L ist.

15. Verfahren nach Anspruch 14, wobei die Konzentration von Nickel-Ionen in der Nickelchloridlösung größer als etwa 50 g/L ist.

16. Verfahren nach einem der Ansprüche 1 bis 15, wobei die Nickelchloridlösung zusätzlich Calciumchlorid, Magnesiumchlorid, Natriumchlorid, Kaliumchlorid, Kobaltchlorid, Manganchlorid, Zinkchlorid, Kupfer(II)-Chlorid, Kupfer(I)-Chlorid, Aluminiumchlorid oder Eisenchlorid aufweist.

17. Verfahren nach Anspruch 1, das weiter die folgenden Schritte aufweist:
d1) Mischen der mit Nickel-Ionen angereicherten organischen
Extraktionsmittellösung mit einer sauren wässrigen Lösung, sodass Nickel-Ionen in die wässrige Lösung transferiert werden;
e1) Trennen der organischen Extraktionsmittellösung von der wässrigen Lösung;
und
f1) Rückgewinnung von Nickel-Ionen aus der wässrigen Lösung.

18. Verfahren nach Anspruch 17, wobei in Schritt d) zusammen mit Nickel-Ionen auch in der mit Nickel-Ionen angereicherten organischen Extraktionsmittellösung enthaltene Aluminium-Ionen in die wässrige Lösung transferiert werden.

19. Verfahren nach Anspruch 17, wobei die Nickel-Ionen zu Nickelmetall weiterverarbeitet werden.

20. Verfahren nach Anspruch 19, wobei die Nickel-Ionen mittels Gewinnungselektrolyse und/oder Wasserstoffreduktion zu Nickelmetall weiterverarbeitet werden.

21. Verfahren nach Anspruch 17, wobei die Nickel-Ionen mittels Kristallisierung zu Nickelsulfat oder Nickelchlorid weiterverarbeitet werden.

22. Verfahren nach Anspruch 17, wobei die saure wässrige Lösung eine Schwefelsäure und/oder Salzsäure aufweisende Lösung ist.

23. Verfahren nach einem der Ansprüche 1 bis 22, das weiter die folgenden Schritte aufweist:
d2) Mischen einer zweiten organischen Extraktionsmittellösung mit mindestens einem Teil der wässrigen Lösung aus Schritt b), sodass Kobalt- und/oder Mangan-Ionen in die zweite organische Extraktionsmittellösung transferiert werden;
e2) Trennen der zweiten organischen Extraktionsmittellösung von der wässrigen Lösung; und
f2) Rückgewinnung von Kobalt- und/oder Mangan-Ionen aus der zweiten organischen Extraktionsmittellösung.

24. Verfahren nach Anspruch 23, wobei die zweite organische Extraktionsmittellösung eine Lösung eines lonenpaar-Extraktionsmittels oder eines solvatisierenden Extraktionsmittels ist.

## Revendications

1. Procédé destiné à enrichir une solution d'agent extractant organique en ions nickel incluant les étapes consistant à :
a) mélanger une solution d'agent extractant organique immiscible à l'eau chargée avec des ions nickel et des ions de métal non-nickel avec une solution aqueuse de chlorure de nickel de sorte que les ions nickel issus de la solution aqueuse de chlorure de nickel remplacent au moins certains des ions de métal non-nickel dans la solution d'agent extractant organique pour donner une solution d'agent extractant organique enrichie en ions nickel ;
b) séparer la solution d'agent extractant organique enrichie en ions nickel de la solution aqueuse de chlorure de nickel ; et
c) recycler en continu la solution aqueuse de chlorure de nickel au sein du procédé en maintenant la concentration en ions nickel dans la solution aqueuse de chlorure de nickel à un niveau plus grand que 50 g/L en ajoutant de l'acide chlorhydrique dans une quantité suffisante pour maintenir cette concentration.

2. Procédé selon la revendication 1 dans lequel l'acide chlorhydrique est ajouté à la solution de chlorure de nickel dans l'étape a).

3. Procédé selon la revendication 1, incluant en outre l'étape consistant à extraire des ions nickel de la solution d'agent extractant organique enrichie en ions nickel.

4. Procédé selon la revendication 3, incluant en outre l'étape consistant à extraire des ions aluminium, en plus des ions nickel, de la solution d'agent extractant organique enrichie en ions nickel.

5. Procédé selon la revendication 1, incluant en outre l'étape consistant à extraire des ions de métal non-nickel de la solution aqueuse.

6. Procédé selon la revendication 5, dans lequel les ions de métal non-nickel sont des ions cobalt, des ions manganèse, des ions zinc, des ions cuivre, des ions fer, des ions calcium, des ions magnésium, des ions aluminium, des ions sodium ou des ions potassium.

7. Procédé selon la revendication 6, dans lequel les ions de métal non-nickel sont des ions manganèses.

8. Procédé selon la revendication 7, dans lequel l'acide chlorhydrique est préparé d'ions chlorure dans la solution aqueuse après que des ions manganèse sont extraits de la solution aqueuse.

9. Procédé selon la revendication 8, dans lequel de l'acide sulfurique est ajouté à la solution aqueuse pour produire l'acide chlorhydrique qui est ensuite recyclé vers la solution de chlorure de nickel dans l'étape a).

10. Procédé selon l'une quelconque des revendications 3 à 9, dans lequel les ions de métal extraits sont davantage traités en métal ou produits contenant du métal.

11. Procédé selon la revendication 1, dans lequel la solution d'agent extractant organique immiscible à l'eau est une solution d'agent extractant organique dans un solvant hydrocarbure aliphatique ou aromatique, ou un mélange de solvants hydrocarbures aliphatiques et aromatiques.

12. Procédé selon la revendication 11, dans lequel l'agent extractant organique est un acide carboxylique, un acide carboxylique halogéné, un acide monothiophosphinique, un acide organo-phosphoreux ou l'un de leurs mélanges.

13. Procédé selon la revendication 11, dans lequel le solvant est un solvant hydrocarbure aliphatique ou aromatique à haut point éclair, ou l'un de leurs mélanges.

14. Procédé selon l'une quelconque des revendications 1 à 13, dans lequel la concentration en ions chlorures dans la solution de chlorure de nickel est plus grande qu'environ 100 g/L.

15. Procédé selon la revendication 14, dans lequel la concentration en ions nickel dans la solution de chlorure de nickel est plus grande qu'environ 50 g/L.

16. Procédé selon l'une quelconque des revendications 1 à 15, dans lequel la solution de chlorure de nickel contient de surcroît du chlorure de calcium, du chlorure de magnésium, du chlorure de sodium, du chlorure de potassium, du chlorure de cobalt, du chlorure de manganèse, du chlorure de zinc, du chlorure de cuivre (+2), du chlorure de cuivre (+1), du chlorure d'aluminium, ou du chlorure ferreux.

17. Procédé selon la revendication 1, incluant en outre les étapes consistant à :
d1) mélanger la solution d'agent extractant organique enrichie en ions nickel avec une solution aqueuse acide de sorte que les ions nickel soient transférés dans la solution aqueuse ;
e1) séparer la solution d'agent extractant organique de la solution aqueuse ; et
f1) récupérer les ions nickel de la solution aqueuse.

18. Procédé selon la revendication 17, dans lequel des ions aluminium contenus dans la solution d'agent extractant organique enrichie en ions nickel sont également transférés conjointement avec des ions nickel dans la solution aqueuse à l'étape d).

19. Procédé selon la revendication 17, dans lequel les ions nickel sont en outre traités en métal nickel.

20. Procédé selon la revendication 19, dans lequel les ions nickel sont en outre traités en métal nickel par électromaclage et/ou réduction d'hydrogène.

21. Procédé selon la revendication 17, dans lequel les ions nickel sont en outre traités en sulfate de nickel ou chlorure de nickel par cristallisation.

22. Procédé selon la revendication 17, dans lequel la solution aqueuse acide est une solution contenant de l'acide sulfurique et/ou de l'acide chlorhydrique.

23. Procédé selon l'une quelconque des revendications 1 à 22, incluant en outre les étapes consistant à :
d2) mélanger une seconde solution d'agent extractant organique avec au moins une partie de la solution aqueuse de l'étape b) de sorte que des ions cobalt et/ou manganèse soient transférés dans la seconde solution d'agent extractant organique ;
e2) séparer la seconde solution d'agent extractant organique de la solution aqueuse ; et
f2) récupérer des ions cobalt et/ou manganèse de la seconde solution d'agent extractant organique.

24. Procédé selon la revendication 23, dans lequel la seconde solution d'agent extractant organique est une solution d'un agent extractant de paire d'ions ou d'un agent extractant solvatant.
